(19)

Europäisches
Patentamt
European
Patent Office
Office européen
des brevets

(11)  **EP 1 526 309 B1**

(12)  **EUROPEAN PATENT SPECIFICATION**

(45) Date of publication and mention
of the grant of the patent:
**25.04.2007  Bulletin 2007/17**

(51) Int Cl.:
***F16H 61/662*** (2006.01)

(21) Application number: **03023938.8**

(22) Date of filing: **22.10.2003**

(54) **Continuously variable transmission**

Stufenloses Getriebe

Transmission à variation continue de vitesse

(84) Designated Contracting States:
**AT BE BG CH CY CZ DE DK EE ES FI FR GB GR
HU IE IT LI LU MC NL PT RO SE SI SK TR**

(43) Date of publication of application:
**27.04.2005  Bulletin 2005/17**

(73) Proprietor: **ROBERT BOSCH GMBH
70442 Stuttgart (DE)**

(72) Inventor: **Brandsma, Arjen
5045 WN Tilburg (NL)**

(74) Representative: **Plevier, Gabriel Anton Johan
Maria
Van Doorne's Transmissie B.V.,
Patents Department,
Postbus 500
5000 AM  Tilburg (NL)**

(56) References cited:
**EP-A- 1 167 839           WO-A-98/02679
US-A1- 2002 115 510**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a continuously variable transmission with a control system as defined in the preamble of claim 1.

Such a generic transmission and control system are generally known, for example from the European patent publication EP-B-1 218 654. In such transmissions it is relied on friction between a drive component, e.g. a drive pulley, and a driven component, e.g. a drive belt, of the transmission to transmit mechanical power between an ingoing and an outgoing shaft thereof at a variable torque and speed ratio. To allow the friction force between the said two transmission components to transmit the said mechanical power without excessive slip and associated power loss occurring, a sufficient normal force is effected there between, whereby its level is usually proportionally adjusted to the instantaneous level of the power to be transmitted. Such adaptive control of the normal force is realised by means of a control system of the transmission operating in accordance with a control method for determining a desired level for the said normal force and including an electromechanic activation system, comprising for example an electronic motor and a spindle that is associated with at least one of the said two transmission components, or an electro-hydraulic activation system, comprising for example a piston-cylinder assembly that is associated with at least one of the said two transmission components, for actually applying the desired normal force.

Two basic control methods are available for adjusting the normal force in relation to the power to be transmitted. Firstly, it is known, for example from the said European patent, to directly control the normal force Fn in the frictional contact between the said two transmission components to a desired level based on the relation:

$$Fn = \frac{Fw}{\tau} * (1 + Sf)$$

Herein is Fw the friction force that is minimally required to transmit the power to be transmitted, i.e. without macro-slip occurring between the said two transmission components, $\tau$ is a torque transmission coefficient, which is assumed to be essentially constant, and Sf is a so-called safety factor. This first control method is referred to in the following as the safety-based control method.

Further, it is generally known that slip, i.e. a relative movement, is inevitably experienced between the said two transmission components when power is transmitted there between by means of friction. At least in a so-called micro-slip region of the said slip, an amount of slip Z is generally more or less proportional to the required friction force Fw and inversely proportional to the applied normal force Fn. In a second known control method this feature is used to control the normal force Fn so as to realise a predetermined amount of micro-slip Z. This second control method is referred to in the following as the slip-based control method and is for example discussed in the European patent application EP-A-0 858 564.

These control methods are of course linked to each other, because the amount of micro-slip Z experienced with the safety-based control method is inversely proportional to the level of the safety factor Sf applied therein and the level of the safety factor Sf experienced with the slip-based control method is inversely proportional to the amount of micro-slip Z applied therein.

In the known control methods the level of the safety factor Sf and the amount of micro-slip Z that are applied therein have been determined such that the transmission may operate satisfactory, at least in most of the feasible operating conditions, by providing a safety margin to the friction force Fw allowed by the applied normal force Fn with respect to the friction force Fw that is minimally required to transmit the power to be transmitted. Such safety margin takes into account possible shortcomings of the control system, e.g. variations in the torque transmission coefficient $\tau$ or inaccuracies in the activation system, and any inevitable delay between a change in the power to be transmitted and a consequently required change in the normal force Fn. It is generally believed that in order to improve transmission efficiency the safety margin should be as small as possible and preferably non-existent to realise optimum transmission efficiency, as is, for example, discussed in relation to the safety factor Sf in the above-mentioned European patent publication and in EP-A-1 167 839 and WO-A-98/02679, which shows a transmission according to the preamble of claim 1.

The present invention sets out to improve the existing control methods in terms of the efficiency of the transmission that is controlled thereby. Optimising transmission efficiency is particularly relevant for transmissions that are applied in motor vehicles. According to the invention this aim is realised in the transmission according to claim 1.

The invention relies on the insight that a loss of power between the shafts of the transmission, which power loss determines the transmission efficiency, is at least caused by a torque loss and a rotational speed loss between the transmission shaft, whereby these two types of power loss are both linked to the level of the safety factor Sf, c.q. the amount of micro-slip Z, however, in mutually opposite directions. By determining the sum of these two types of power loss in relation to either the level of the safety factor Sf, or the amount of micro-slip Z, a minimum for such total power loss, i.e. maximum transmission efficiency, may be determined that occurs at a certain optimal safety factor Sf, c.q. micro-slip Z. According to the invention, such optimal safety factor Sf, c.q. micro-slip Z was found to vary in dependence on a geometrically determined transmission ratio, at least for the presently investigated belt-and-pulley type continuously variable transmission provided with a push-type drive belt. Nether the less, the method in accordance with the invention may be applied to all types of continuously variable transmission.

The invention will now be explained in more detail referring to a favourable embodiment of the transmission in accordance therewith with reference to the accompanying figures, wherein:

Figure 1 is a schematic representation of a belt-and-pulley type continuously variable transmission to which the present invention relates.
Figures 2 to 4 each provide an example of an efficiency measurement performed on a transmission of the type in accordance with figure 1.
Figure 5 shows a graph wherein an optimal safety factor Sf in terms of transmission efficiency are depicted for several geometrically determined transmission ratios.

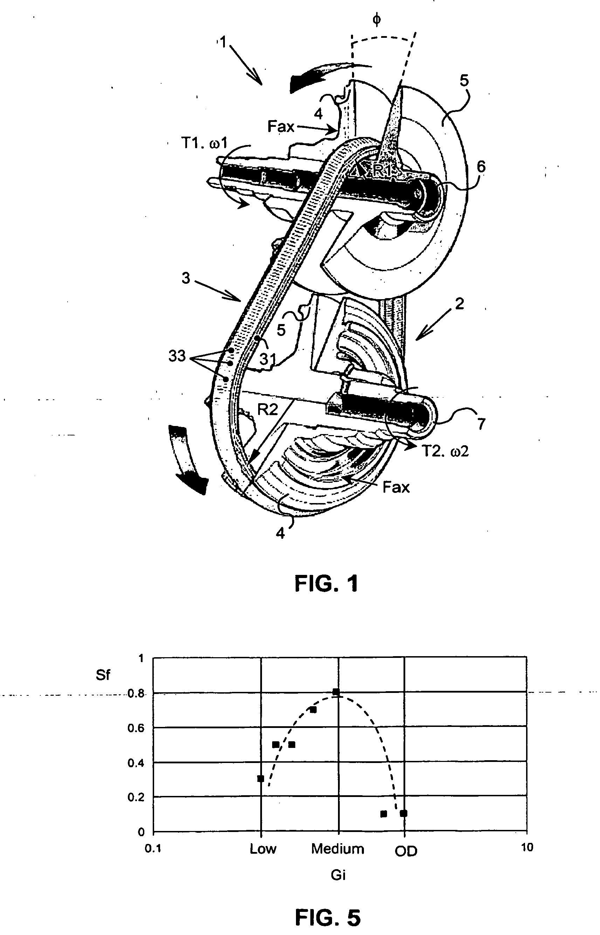

Figure 1 shows the central parts of a known continuously variable transmission, as is commonly applied in the driveline of personal vehicles between the engine and the drive wheels thereof. The transmission comprises two pulleys 1, 2, each provided with two pulley sheaves 4, 5, between which a metal push-type drive belt 3 is present for transmitting a rotational movement and an accompanying torque from the one pulley 1, 2 to the other 2, 1. The pulley sheaves 4, 5 are generally shaped conical and at least one pulley sheave 4 is incorporated in the transmission axially moveable along a respective pulley shaft 6, 7 over which it is placed. The transmission also includes an activation system (not depicted) that impose on the said at least one sheave 4 an axially oriented clamping force Fax directed towards the respective other pulley sheave 5 such that the belt 3 is clamped there between, whereby a normal force Fn is applied to the predominantly axially oriented side faces of the belt 3.

In this example, the belt 3 comprises an endless tensile means 31 and a multitude of plate-like transverse elements 33 that are provided on the tensile means 31 oriented predominantly transversely thereto and movable along its longitudinal direction. The elements 33 take-up the normal force Fn, such that at rotation of a driving pulley 1 when a torque is applied to it, friction between the sheaves 4, 5 and the belt 3 in the tangential direction, causes the elements 33 to be thrust from the driving pulley 1 to the driven pulley 2, around the drive pulley 2 and back to the driving pulley 1, thereby being guided and supported by the tensile means 31.

A geometrically determined transmission ratio Gi is thereby determined and defined by the quotient of the effective radius of contact R1 of the belt 3 at the driving pulley 1 and the effective radius of contact R2 of the belt 3 at the driven pulley 2. Such geometric ratio Gi may vary continuously in a range of ratios, typically between a smallest value of around 0.45, which is commonly denoted Low-ratio, and a largest value of around 2.3, which is commonly denoted Overdrive or OD-ratio. In a so-called Medium-ratio, in between the above-mentioned extreme geometric ratios, the quotient of the said effective radii R1 and R2 is 1.

Besides the geometrically determined transmission ratio Gi, also a speed ratio Si and torque ratio Ti are determined by the quotient of the rotational speed $\omega1$ of, respectively the torque T1 on the shaft 6 of the drive pulley 1, i.e. the ingoing shaft 6 of the transmission, and the rotational speed $\omega2$ of, respectively the torque T2 on the shaft 7 of the driven pulley 2, i.e. the outgoing shaft 7 of the transmission. Ideally, i.e. when no power loss occurs at perfect or 100% efficiency, the torque ratio Ti is equal to the geometric ratio Gi and the speed ratio Si is equal to the inverse values thereof. However, in practice and in the situation where the ingoing shaft 6 drives the outgoing shaft 7, the torque ratio Ti is at least slightly larger than the geometric ratio Gi and the inverse value of the speed ratio Si is at least slightly smaller than the geometric ratio Gi. Some of the power thus being lost between the transmission shafts 6, 7. According to the invention such power loss may be conveniently quantified by the equation (2) that defines a transmission efficiency $\eta$ as 100% minus the above-mentioned power loss:

$$\eta = \left(1 - \frac{Si - (Ti)^{-1}}{Si}\right) * 100\% \qquad (2)$$

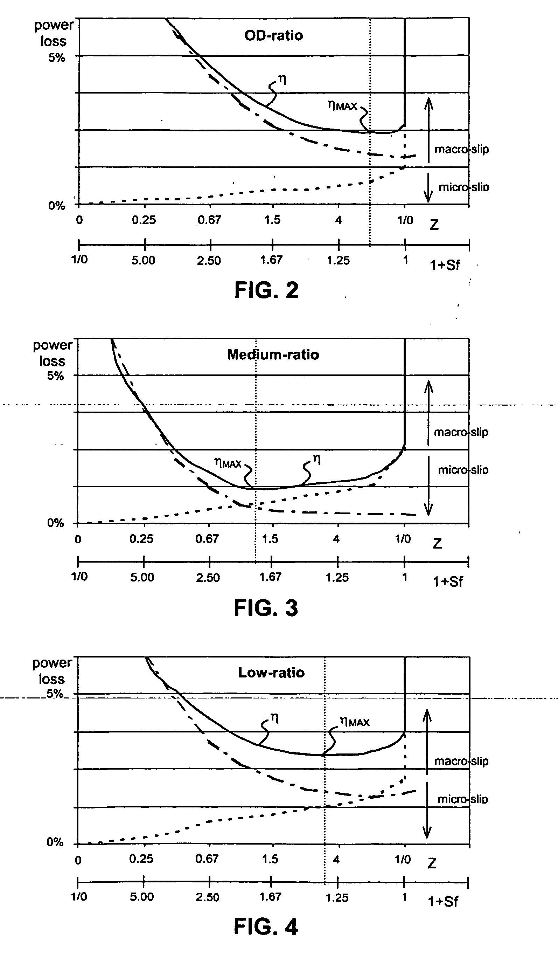

For any given geometrical ratio Gi the transmission efficiency $\eta$ was found to vary with the level of the safety factor Sf, or the amount of micro-slip Z. Figures 2-4 each represent a graph of actual, though filtered, measurement results for the overall transmission efficiency $\eta$ as a function of safety factor Sf and micro-slip Z by the solid curves, whereby the graph in figure 2 was measured in OD-ratio, the graph in figure 3 in Medium-ratio and the graph in figure 4 in Low-ratio. The graphs also show the power loss components that determine such overall transmission efficiency $\eta$, being the so-called rotational speed or slip losses that are indicated by the dashed curves and the so-called torque losses that are indicated by the dash-dotted curves. Each of the said graphs show a maximum transmission efficiency $\eta_{MAX}$, i.e. a minimum in the solid curves, at a certain optimal safety factor Sf or micro-slip Z that is in each case indicated by a dotted vertical line.

In the graphs, the safety factor Sf plus 1 (1+Sf; see also equation (1)) is plotted on the horizontal axis and is determined by applying a fixed normal force Fn between the sheaves 4, 5 and the belt 3 and determining the maximum transmittable torque under these conditions, i.e. the torque level above which the amount of slip Z abruptly increases that defines the transition from micro-slip to macro-slip, and dividing it by the torque level that is applied to the ingoing shaft 6 and that is varied between zero and the said maximum transmittable torque. The amount of micro-slip Z in the graph is defined simply as the inverse value of the safety factor Sf, i.e. indicating merely a slip speed factor Z.

The measurement results are summarised in figure 5 that shows a graph wherein the optimal safety factor Sf in terms of transmission efficiency $\eta$ is depicted for several transmission ratios Gi, including OD-, Medium- and Low-ratio, which are joint by the dashed curve indicating the general trend. From this graph it is clear that in terms of the overall transmission efficiency $\eta$ the optimum safety factor Sf is largest in Medium-ratio (whereby, consequently, the optimum micro-slip Z has the smallest value). The optimum safety factors Sf in OD-ratio and Low-ratio are both smaller than in Medium-ratio and are mutually approximately equal. If anything, the optimum safety factor Sf in OD-ratio is slightly smaller still than that in Low-ratio. Preferably, during operation of the transmission, the safety factor Sf is equal to approximately 0.8 in Medium-ratio, to approximately 0.3 in Low-ratio and to approximately 0.15 in OD-ratio.

Moreover, it can be seen that the influence of the safety factor Sf on the efficiency in Low-ratio is relatively small, at least is smaller than in OD-ratio. It may thus be opted to keep the safety factor Sf at a constant and intermediately high value between Low-ratio and Medium-ratio, e.g. around 0.5, and to reduce its value only from Medium-ratio towards OD-ratio, e.g. linearly from such value of 0.5 to about 0.2.

The optimum value for the slip speed factor Z, which is also indicated in the graphs 2-4, may in practice be conveniently expressed as an amount of relative movement or relative rotational speed difference Z% between the said two transmission components, or, in this particular case, the drive belt 3 and one of the two pulleys 1, 2. Thus, in accordance with the invention, such relative amount of micro-slip Z% is defined by:

$$Z\% = \left|1 - \frac{1}{Gi * Si}\right| * 100\%$$

The optimum values for such relative amount of micro-slip Z% were found to be about 0.5% to 1.5% in Medium-ratio and about 1.5% to 2.5% in OD-ratio or Low-ratio. In a further elaboration of the invention, the control method is adapted such that the optimum value for the safety factor Sf and/or the amount of micro-slip Z in terms of transmission efficiency $\eta$ is determined not only in relation to the transmission ratio, but also in relation to the torque level T1, T2 or even the rotational speed $\omega 1$, $\omega 2$ of the ingoing shaft 6 or outgoing shaft 7 itself. It was found that under normal circumstances these optimum values are relatively independent from the level of the rotational speed $\omega 1$, $\omega 2$. These optimum values do, however, show a notional dependency on the torque level T1, T2, whereby the safety factor Sf increases and the relative amount of micro-slip Z% decreases as the said torque level T1, T2 increases.

In yet a further elaboration of the invention, in determining the transmission efficiency $\eta$ not only the said speed and torque losses between the driving and driven pulley 1 and 2 as expressed in the equation (2) are taken into account, but also additional, generally more indirect, power losses that occur in the transmission. Such additional losses are in general primarily associated with the activation system that realises the required clamping forces Fax. In this respect it was found that, generally speaking, for an electro-mechanic activation system these additional losses are more or less invariable and, therefore, have little or no influence on the above-explained general rule that the optimum safety factor Sf is highest in Medium-ratio and considerably lower and more or less equal in OD-ratio and Low-ratio. On the other hand, in case of an electro-hydraulic activation system, these additional losses were found to have a mitigating effect on the dependency of the optimum safety factor (or the optimum relative amount of micro-slip Z%) on the relevant parameters such as transmission ratio, torque level T1, T2 and rotational speed w1, w2. This means that the optimum safety factor in Medium-ratio can become as little as 0.5, whereas the optimum safety factor in OD-ratio can become as high as 0.3, such that applying a single constant value for the safety factor Sf, generally of about 0.4, or for the relative amount of micro-slip Z%, generally of about 1.5%, allows for a relatively simple control method, while still realising good transmission efficiency.

**Claims**

1.  Continuously variable transmission for varying a transmission ratio (Gi) between an ingoing shaft (6) and an outgoing shaft (7) of the transmission in a range of transmission ratios (Gi) that is defined around an intermediate value (Medium-ratio) thereof, between a first extreme transmission ratio (Low-ratio), wherein a rotational speed ($\omega$2) of the outgoing shaft (7) is reduced relative to a rotational speed ($\omega$1) of the ingoing shaft (6), and a second extreme ratio (OD-ratio), wherein a rotational speed ($\omega$2) of the outgoing shaft (7) is increased relative to a rotational speed ($\omega$1) of the ingoing shaft (6), the transmission comprising a drive component (1; 3) and a driven component (3; 2) that are mutually in frictional contact and which between during operation a normal force is effected by means of a control system of the transmission operating in accordance with a control method, **characterised in that,** said control method determines and applies the normal force such that a pre-determined amount of relative movement (Z) is achieved between the said components (1, 3; 3, 2), and **in that**, such pre-determined relative movement (Z) is lower in an intermediate value (Medium-ratio) of the transmission ratio (Gi) than in the said first extreme value (Low-ratio) thereof.

2. Continuously variable transmission according to claim 1, **characterised in that**, the said relative movement (Z) is in the range between 0.5% and 1.5% in the said intermediate value (Medium-ratio) of the transmission ratio (Gi) and in the range between 1.5% and 2.5% in the said first extreme value (Low-ratio) thereof.

3. Continuously variable transmission according to any one of the preceding claims, **characterised in that**, the said relative movement (Z) is equal in the said first and the said second extreme value (Low-ratio, OD-ratio) of the transmission ratio (Gi).

4. Continuously variable transmission according to any one of the preceding claims, **characterised in that**, the inverse value of the said relative movement (Z) increases as a torque level (T1, T2) on the ingoing shaft (6) or on the outgoing shaft (7) increases.

5. Continuously variable transmission according to any one of the preceding claims, **characterised in that**, the control system of the transmission includes an electro-mechanic activation system that is associated with at least one of the said two transmission components (1, 3; 3, 2) for applying the normal force determined by the control method.

**Patentansprüche**

1. Stufenloses Getriebe zur Veränderung eines Übersetzungsverhältnisses (GI) zwischen einer Eingangswelle (6) und einer Ausgangswelle (7) des Getriebes in einem Bereich des Übersetzungsverhältnisses (GI), der um einen mittleren Wert (mittleres Verhältnis) definiert ist, zwischen einem ersten Grenzwert des Übersetzungsverhältnisses (niedriges Verhältnis), bei dem eine Drehgeschwindigkeit ($\omega$2) der Ausgangswelle (7) relativ zu einer Drehgeschwindigkeit ($\omega$1) der Eingangswelle (6) vermindert ist und einem zweiten Grenzwert (OD Verhältnis), bei dem eine Drehgeschwindigkeit ($\omega$2) der Ausgangswelle (7) relativ zu einer Drehgeschwindigkeit ($\omega$1) der Eingangswelle (6) erhöht ist, wobei das Getriebe eine Antriebskomponente (1; 3) und eine Abtriebskomponente (3; 2) aufweist, welche in Reibkontakt zueinander stehen und zwischen welchen eine Normalkraft mittels eines Steuerungssystems des nach einem Steuerungsverfahren arbeitenden Getriebes in Betrieb ausgeübt wird, **dadurch gekennzeichnet, dass** das Steuerungsverfahren die Normalkraft bestimmt und aufbringt, so dass eine vorbestimmte Menge an Relativbewegung (Z) zwischen diesen Komponenten (1, 3; 3, 2) erzielt wird, und dass eine derartige vorbestimmte Relativbewegung (Z) bei einem mittleren Wert (mittleres Verhältnis) des Übersetzungsverhältnisses (Gi) geringer ist als beim ersten Grenzwert (geringes Verhältnis).

2. Stufenloses Getriebe nach Anspruch 1, **dadurch gekennzeichnet, dass** die Relativbewegung (Z) beim mittleren Wert (mittleres Verhältnis) des Übersetzungsverhältnisses (Gi) im Bereich zwischen 0,5 % und 1,5 % liegt, und dass sie beim ersten Grenzwert (niedriges Verhältnis) desselben im Bereich zwischen 1,5 % und 2,5 % liegt.

3. Stufenloses Getriebe nach einem der vorstehenden Ansprüche, **dadurch gekennzeichnet, dass** die Relativbewegung (Z) beim ersten und beim zweiten Grenzwert (mittleres Verhältnis, OD-Verhältnis) des Übersetzungsverhältnisses (Gi) die gleiche ist.

4. Stufenloses Getriebe nach einem der vorstehenden Ansprüche, **dadurch gekennzeichnet, dass** der umgekehrte Wert der Relativbewegung (Z) mit steigendem Drehmoment (TI, T2) auf die Eingangswelle (6) bzw. auf die Ausgangswelle (7) ansteigt.

5. Stufenloses Getriebe nach einem der vorstehenden Ansprüche, **dadurch gekennzeichnet, dass** das Steuerungssystem des Getriebes ein elektromechanisches Ansteuerungssystem umfasst, welches mindestens einer der beiden Getriebekomponenten (1, 3; 3, 2) zugeordnet ist, um die vom Steuerungsverfahren bestimmte Normalkraft aufzubringen.

**Revendications**

1. Transmission à variation continue destinée à faire varier un rapport de transmission (GI) entre un arbre entrant (6) et un arbre sortant (7) de la transmission dans une plage de rapports de transmission (GI) qui est définie autour d'une valeur intermédiaire (rapport moyen) de ceux-ci, entre un premier rapport de transmission extrême (rapport bas), où une vitesse de rotation ($\omega$2) de l'arbre sortant (7) est réduite par rapport à une vitesse de rotation ($\omega$1) de l'arbre entrant (6), et un deuxième rapport extrême (rapport OD), où une vitesse de rotation ($\omega$2) de l'arbre sortant (7) est augmentée par rapport à une vitesse de rotation ($\omega$1) de l'arbre entrant (6), la transmission comprenant un composant d'entraînement (1 ; 3) et un composant entraîné (3 ; 2) qui sont mutuellement en contact par friction, et entre lesquels, en cours de fonctionnement, une force normale est produite au moyen d'un système de commande de la transmission fonctionnant selon un procédé de commande, **caractérisée en ce que** ledit procédé de commande détermine et applique la force normale de telle sorte qu'une quantité prédéterminée de mouvement relatif (Z) est atteinte entre lesdits composants (1, 3 ; 3, 2), et **en ce que** ce mouvement relatif prédéterminé (Z) est inférieur à une valeur intermédiaire (rapport moyen) du rapport de transmission (GI) qu'à ladite première valeur extrême (rapport bas) de celui-ci.

2. Transmission à variation continue selon la revendication 1, **caractérisée en ce que** ledit mouvement relatif (Z) se situe dans la plage entre 0,5 % et 1,5 % à ladite valeur intermédiaire (rapport moyen) du rapport de transmission (GI) et dans la plage entre 1,5 % et 2,5 % à ladite première valeur extrême (rapport bas) de celui-ci.

3. Transmission à variation continue selon l'une quelconque des revendications précédentes, **caractérisée en ce que** ledit mouvement relatif (Z) est égal à ladite première et à ladite deuxième valeur extrême (rapport bas, rapport OD) du rapport de transmission (GI).

4. Transmission à variation continue selon l'une quelconque des revendications précédentes, **caractérisée en ce que** la valeur réciproque dudit mouvement relatif (Z) augmente à mesure qu'un niveau de couple (Tl, T2) sur l'arbre entrant (6) ou sur l'arbre sortant (7) augmente.

5. Transmission à variation continue selon l'une quelconque des revendications précédentes, **caractérisée en ce que** le système de commande de la transmission comprend un système d'activation électromécanique qui est associé à au moins l'un desdits deux composants de transmission (1, 3 ; 3, 2) pour appliquer la force normale déterminée par le procédé de commande.

**FIG. 1**

**FIG. 5**

**FIG. 2**

**FIG. 3**

**FIG. 4**